# EUROPEAN PATENT APPLICATION

(11) **EP 4 578 702 A1**
(43) Date of publication of application: **02.07.2025**
(21) Application number: 24206282.6
(22) Date of filing: 11.10.2024
(51) Int. Cl.: B60L 3/12, B60L 15/20, B60L 58/12, B60W 30/188, H02P 5/74

(54) **METHOD FOR DETERMINING A TORQUE DISTRIBUTION BETWEEN TWO OR MORE ELECTRIC MACHINES OF AN ELECTRIC VEHICLE**

(71) Applicant: Volvo Car Corporation, 405 31 Göteborg (SE)
(72) Inventor: TORINSSON, Juliette, 40531 Göteborg (SE); JONASSON, Mats, 40531 Göteborg (SE)
(74) Representative: Maiwald GmbH

(57) **Abstract**

The disclosure relates to a method (100) for determining a torque distribution between two or more electric machines (12) of an electric vehicle (1) for a total torque demand of the electric vehicle (1), the method (100) comprising:
- obtaining power loss data, the power loss data being indicative of power loss saving potentials (4) based on torque distributions between the two or more electric machines (12) for different total torque demands and different speeds of the electric vehicle (1);
- obtaining torque demand data indicative of a total torque demand of the electric vehicle (1);
- obtaining speed data indicative of a speed of the electric vehicle (1); and
- determining the torque distribution between the two or more electric machines (12) based on the obtained power loss data, the obtained torque demand data, and the obtained speed data.

## Description

### TECHNICAL FIELD

The present disclosure relates to a method for determining a torque distribution between two or more electric machines of an electric vehicle for a total torque demand of the electric vehicle, a computer program product, a data processing system, and an electric vehicle.

### BACKGROUND ART

An emerging trend in electric vehicles involves using multiple electric machines for propulsion, offering more flexibility in packaging and enhanced vehicle control. There is also a significant emphasis on reducing power losses in electric vehicles to extend their range. By integrating various machine types, such as permanent magnet and induction motors, a diverse configuration of machines can effectively lower energy consumption thereby increasing the energy efficiency. This efficiency may be achieved by identifying the speed and torque conditions where each machine operates with maximum power efficiency. Typically, different machines are optimized to function under specific conditions, such as high or low torque. Another trend in electric vehicles involves assigning a fixed gear to each machine. This means that the machine's speed is directly linked to the vehicle's speed through a fixed gear ratio, except when a clutch is employed to mechanically decouple the machine.

A challenge in reducing the power losses in the electric vehicles lies in identifying an optimal torque distribution between the electric propulsion machines in their drivelines. Optimal in this context typically refers to determining the specific torques for each machine that collectively fulfill a total torque requirement or demand, while minimizing the overall power losses.

### SUMMARY

The problem is at least partially solved or alleviated by the subject matter of the independent claims of the present disclosure, wherein further examples are incorporated in the dependent claims.

According to a first aspect, there is provided a method for determining a torque distribution between two or more electric machines of an electric vehicle for a total torque demand of the electric vehicle, the method comprising:
- obtaining power loss data, the power loss data being indicative of power loss saving potentials based on torque distributions between the two or more electric machines for different total torque demands and different speeds of the electric vehicle;
- obtaining torque demand data indicative of a total torque demand of the electric vehicle;
- obtaining speed data indicative of a speed of the electric vehicle; and
- determining the torque distribution between the two or more electric machines based on the obtained power loss data, the obtained torque demand data, and the obtained speed data.

Accordingly, the method may provide an electric vehicle with two or more electric machines with an optimized torque distribution between the two or more electric machines which fulfills a total torque demand of the electric vehicle for a given speed, in particular a current speed of the electric vehicle and/or desired speed of the electric vehicle, e.g., based on a driver input. Speed herein relates to the speed of the driving movement of the electric vehicle. The total torque demand relates to the torque required for the current and/or desired operation of the electric vehicle, e.g., maintaining the electric vehicle at a certain speed or accelerating the electric vehicle to a certain speed.

The power loss data is indicative of the power loss saving potentials based on torque distributions between the two or more electric machines for different total torque demands and different speeds of the electric vehicle. In other words, the power loss data may indicate the potential to save power or, in other words, reduce power or energy loss with different torque distributions between the electric machines depending on the current situation or parameters of the electric vehicle 1, specifically the total torque demand and the speed. In simple words, the power loss data indicates how much power or energy may be saved to fulfill a certain total torque demand at a certain speed with different torque distributions, in particular in comparison to one another or a baseline or similar. By considering the, in particular, predetermined power loss saving potentials for the torque distributions between the two or more electric machines, specifically for different torque distributions, for different total torque demands and different speeds of the electric vehicle, it is enabled that the optimal torque distribution in terms of (power) efficiency of the electric vehicle may be determined. The power loss data, different from the torque demand data and speed data, may not relate to a current operation but relate to predetermined data. In other words, the torque demand data and the speed data may be dependent and/or determined depending on a current operation of the vehicle, e.g., current torque demand and current speed, whereas the power loss data may be predetermined data, e.g., precalculated and/or stored data. The power loss data may be obtained in any form such as but not limited to one or more tables, e.g., look-up tables, functions, or any other types of relations of power loss saving potentials relative to torque distributions for different total torque demands and different speeds of the electric vehicle.

However, it has been found that the optimal distribution in terms of energy efficiency may cause negative side-effects that may influence other attributes than energy consumption. For example, only torque distribution to the rear wheels may lead to excessive oversteering, which may be undesired, e.g., hazardous. Another example involves a swift redistribution of wheel torques, potentially causing longitudinal jerk disturbances and altering the vehicle's understeer gradient, thereby causing discomfort to the driver. Hence, the determined torque distribution may not under every circumstance, i.e., for different total torque demands and different speeds, be optimal in terms of energy efficiency but alternatively or additionally be optimal in terms of other factors such as but not limited to driving comfort, traction, and similar, as explained further below in more detail. In any case, using the power loss data and the total torque demand and speed of the electric vehicle, the method enables to determine an optimal torque distribution for reduced energy consumption and/or other important characteristics, such as but not limited to driving comfort.

The method may in particular be a computer implemented method. This means that at least one, multiple or all of the steps of the method may be carried out by a data processing system, which may comprise one or more computers or data processing apparatuses. Different steps may be carried out by the same or by different computers. A computer is herein understood as a data processing apparatus, which can carry out the steps as defined by the method.

The method may in particular be carried out or executed by a data processing system of the electric vehicle. In other words, the method may be executed or carried out online on or by the electric vehicle. This enables the electric vehicle to determine the torque distribution in every different situation individually depending on the obtained torque demand data and the obtained speed data but not limited thereto. In particular, the determination may be made and used in real-time operation of the electric vehicle. However, the power loss data may have been predetermined by another data processing system for that specific electric vehicle depending on its configuration, in particular the two or more electric machines, for example. The determination of the torque distribution or generally the method may include a utilization or application of the determined torque distribution by the electric vehicle, specifically by the electric machines. In other words, the method may include utilized or applying the determined torque distribution to the electric machines, thereby distributing the torque among the electric machines according to the determined torque distribution. This step may be executed by the electric vehicle, in particular a propulsion system of the electric vehicle, which comprises the electric machines. For this purpose, the data processing system may provide the determined torque distribution to a control unit of the propulsion system or directly control the propulsion system or electric machines, for example.

An electric vehicle is herein understood as any electric vehicle that uses two or more electric machines for propulsion of the electric vehicle and independent of its energy source. For example, the electric vehicle may use a combustion engine, a fuel cell system and/or a battery system for supplying one or more of the electric machines with electrical energy. The electric vehicle may be for example but not only be a car, such as a passenger car, or a truck.

In an example, the power loss saving potentials may be based on differences between first power loss regions and second power loss regions for the different total torque demands and different speeds of the electric vehicle. The second power loss regions may have a greater power loss than the first power loss regions for the different total torque demands and different speeds of the electric vehicle. Hence, the power loss saving potentials indicate how much power loss saving is possible when the electric machines are operated with a torque distribution that is either in the first power loss regions or the second power loss regions depending on the current total torque demand and the current speed of the electric vehicle. This indication of how much power loss saving is possible in a current situation with a torque distribution may then be used for the determining of the torque distribution. For example, for fully optimizing the energy efficiency or, in other words, minimizing the power loss, the torque distribution may be determined based on the power loss data, which for the current or given total torque demand and speed of the electric vehicle yields the minimum power loss or highest energy efficiency.

In an example, the first power loss regions are minimum power loss regions and the second power loss regions are maximum power loss regions for the different total torque demands and different speeds of the electric vehicle. In particular, the first power loss regions may be minimum power loss regions, where the loss of power is minimal for a given total torque demand and speed or, in other words, velocity. The second power loss regions may be maximum power loss regions, where the loss of power is maximal for a given total torque demand and speed. Accordingly, the difference, e.g., subtraction, between the two power loss regions, namely the first or minimum and the second or maximum power loss regions, indicates the power loss saving potentials for a given total torque demand and speed. Based on the thereby determined power loss saving potentials, the method accordingly may determine an optimal torque distribution.

In an example, the method may further comprise obtaining threshold data indicative of a minimum power loss saving potential as threshold, and wherein the determining of the torque distribution between the two or more electric machines is further based on the threshold data. Accordingly, the determination of the torque distribution is made dependent on a threshold for a minimum power loss saving potential. Depending on whether the threshold is met or not, different torque distributions may be determined. For example, power loss saving potentials considered to be too low according to the threshold may accordingly not be utilized by not applying a torque distribution for achieving lower power loss. Instead, it may be more advantageous to focus on other characteristics or benefits achievable with certain torque distributions such as but not limited to driving comfort or safety because the gain in potential power loss saving is considered too low. Hence, instead of determining a torque distribution that is optimal for power loss saving, when the threshold is not met, a torque distribution may be determined that does not optimize for power loss saving but for another characteristic, e.g., driving comfort. However, when the threshold is met, the potential power loss saving may be sufficient to determine a torque distribution that utilizes or, in other words, realizes the power loss saving when it is being employed or used by the electric vehicle. One particular characteristic of the present disclosure is that power losses are considered. Thereby, it is advantageously possible to obtain the threshold data and in a simple manner utilize it to dictate whether the torque distribution is determined to optimize for power loss saving or a different characteristic.

In an example, the determining of the torque distribution may comprise determining if the minimum power loss saving potential can be utilized based on the obtained power loss data, the obtained torque demand data, and the obtained speed data, and if it is determined that the minimum power loss saving potential can be utilized, determining the torque distribution such that at least the minimum power loss saving potential is utilized. Accordingly, the determined torque distribution may be used by the electric vehicle, specifically the electric machines, to provide the minimum power loss saving according to the minimum power loss saving potential of the threshold. Thereby, the electric vehicle may be optimized for power efficiency or, in other words, for minimized energy consumption if the threshold is met.

In an example, the determining of the torque distribution may comprise determining if the minimum power loss saving potential can be utilized based on the obtained power loss data, the obtained torque demand data, and the obtained speed data, and if it is determined that the minimum power loss saving potential cannot be utilized, determining the torque distribution for optimizing driving comfort and/or safety of the electric vehicle. Accordingly, the determined torque distribution may be used by the electric vehicle, specifically the electric machines, to achieve an optimized driving comfort and/or driving safety. In this case, the electric vehicle is not optimized for energy efficiency or, in other words, for minimized energy consumption because the threshold is not met and hence, the benefit in power loss optimization is comparatively low and the driving comfort and/or driving safety is prioritized over the efficiency when determining the torque distribution. In simple words, based on the threshold, the potential benefit of optimized driving comfort and/or safety is determined to be greater than the potential benefit of optimized efficiency and the torque distribution is determined with the aim of achieving the greater benefit.

In an example, the torque distribution may be determined such that the traction of the electric vehicle is increased, service life of one or more components of the vehicle is increased, and/or driving comfort is increased. Specifically, the torque distribution may influence the traction, service life of components and driving comfort, depending on the particular driving situation. For example, certain torque distributions may allow to minimize the wear of front, rear or all tires as components of the electric vehicle. Also, for example, for good driving comfort, it may be optimal to have all axles of the vehicle propelled with similar torque or at least not with a large difference between the different torques on each axle. If each axle is propelled by one electric machine, this may be achieved by providing a similar torque by each one of the electric machines or at least by avoiding a large unequal torque distribution between the electric machines. Also, the life length and durability of components of the electric vehicle, in particular driveline components, may be optimized. For example, clutches or gears in propulsion systems of electric vehicles, e.g., between the electric machines, may have a limited durability. Accordingly, the number of operations could be limited when determining the torque distribution to extend the lifetime of the clutch or gears.

In an example, the threshold data may be obtained by determining the threshold data based at least on battery data indicative of a state of charge of a battery of the electric vehicle. A battery is a non-limiting example of a possible energy source of the propulsion system of the electric vehicle, which may be supplying the electrical energy or power to operate the electric machines. Additionally, the threshold data may be updated based at least on the battery data. For example, when the state of charge of the battery of the electric vehicle is low or becomes low, the efficiency of the electric vehicle may gain importance over other characteristics such as driving comfort. Hence, in case of low state of charge, the threshold of the minimum power loss saving potential can be decreased such that the torque distribution will be determined to reduce power loss more often depending on the decreased threshold and ultimately more energy is saved compared to cases of high state of charge, where the efficiency is of lower importance than other factors or characteristics such as driving comfort.

In an alternative or additional example, the threshold data may be obtained by determining the threshold data based at least on historic data indicative of a previous acceleration behavior of the electric vehicle. The historic data is historic in that it is recorded or predetermined data from previous usages or operations of the electric vehicle. Hence, the historic data may indicate previous acceleration behaviors of the electric vehicle, e.g., based on driver input. Accordingly, an experience or comfort area of the driver when accelerating the electric vehicle may be derived or assumed from the historic data. The threshold data may accordingly be determined considering the previous acceleration behavior of the driver such that the determination of the torque distribution is dependent on the previous acceleration behavior of the driver, thereby ensuring a high level of comfort and safety for the driver.

In yet another additional or alternative example, the threshold data may be obtained by determining the threshold data based at least on settings data indicative of one or more user settings. The one or more user settings may for example be selectable or adjustable on an interface of the electric vehicle, e.g., a touch interface or generally any user interface for adjusting settings available to a user of the electric vehicle. The one or more user settings may for example be power mode settings. For example, the power mode settings may be an economic or efficient power mode, a comfort mode, a sport mode, or similar. Accordingly, the user may define the threshold by selecting or adjusting the one or more user settings. Thereby, the user, e.g., the driver of the electric vehicle, may control the threshold and thus whether or how often the torque distribution will be determined to optimize energy efficiency of the electric vehicle or other characteristics, such as comfort.

In an example, the power loss data may be predetermined data obtained from a data storage of the electric vehicle. Specifically, the predetermined data may be previously computed data on a computer, which is not on or part of the electric vehicle, and specifically computed or determined for the electric machines and/or the electric vehicle. Accordingly, it is not necessary that the power loss data is determined in every single instance or on the electric vehicle at all. Instead, the predetermined data is being used every time the method is being carried out, ensuring that the computing resources of the data processing system of the electric vehicle are available to determine the torque distribution in a timely manner for real time application.

According to a second aspect, there is provided a computer program product comprising instructions which, when executed by a data processing system, cause the data processing system to carry out the method of the first aspect of this disclosure.

The computer program product may be a computer program as such or a product such as a computer readable medium having stored the computer program thereon.

According to a third aspect, there is provided a data processing system comprising means for carrying out the method of the first aspect of this disclosure. The means may for example include the computer program product.

According to a fourth aspect, there is provided a vehicle comprising the data processing system of the third aspect of this disclosure.

The vehicle may in particular be a road vehicle, such as a car or truck, for example.

It is noted that the above examples may be combined with each other irrespective of the aspect involved. Accordingly, the method may be combined with structural features and, likewise, the computer program product, data processing system and the electric vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method for determining a torque distribution between two or more electric machines of an electric vehicle for a total torque demand of the electric vehicle;
- Figure 2: shows a schematic illustration of an electric vehicle;
- Figure 3: shows a plot of a power efficiency map for one or more electric machines of the electric vehicle of Fig. 2;
- Figure 4: shows a plot of power loss regions of the electric vehicle of Fig. 2 for different total torque demands and different speeds of the electric vehicle; and
- Figure 5: shows a plot of power loss saving potentials for certain torque distributions between the electric machines of the electric vehicle of Fig. 2.

### DETAILED DESCRIPTION

The Figures are merely schematic representations and serve only to illustrate examples of the disclosure. Identical or equivalent elements are in principle provided with the same reference signs.

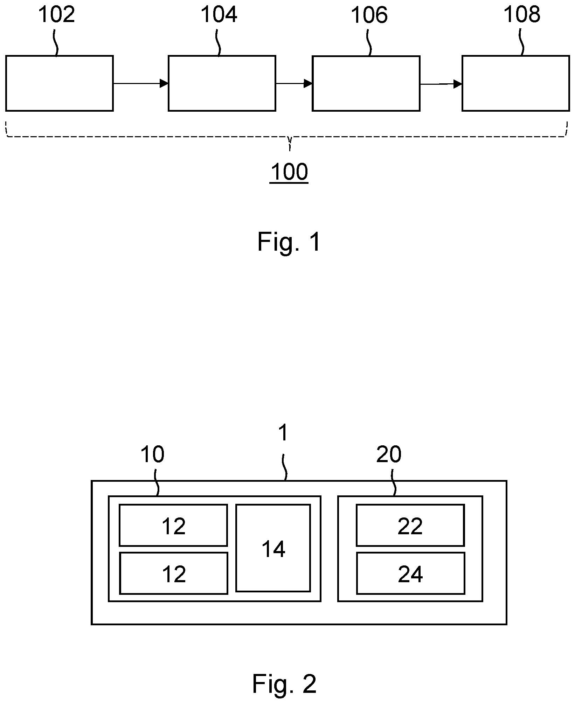

Fig. 1 schematically illustrates a method 100 for determining a torque distribution between two or more electric machines 12 of a propulsion system 10 of an electric vehicle 1 (see Fig. 2) for a total torque demand of the electric vehicle 1. To meet or, in other words, provide the total torque demand or, in other words, the required torque in a current operation of the electric vehicle 1 as per the driver input or request, it is necessary to determine and control which of the electric machines 12 provides how much torque. In other words, a torque distribution between the two or more electric machines 12 needs to be determined and provided for operating the electric vehicle 1 with the two or more electric machines 12.

In this example, two electric machines 12 are illustrated but there may be more electric machines 12 in the propulsion system 10 of the electric vehicle 1. For example, there may be one electric machine 12 per axle of the electric vehicle 1 or there may be one electric machine 12 per wheel of the electric vehicle 1. Also, there may be multiple electric machines 12 on the same axle or same wheel or there may be any other configuration.

The method 100 may in particular be computer-implemented and carried out by a data processing system 20 of the electric vehicle 1. As shown in the schematic illustration of the electric vehicle 1 in Fig. 2, the data processing system 20 may comprise a data processing apparatus 22 and a computer program product 24 containing instructions which may be executable by the data processing apparatus 22 to carry out at least part of the method 100. The data processing system 20 may for example be a control unit or provide data to a control unit of the vehicle 1 for controlling the torque distribution between the electric machines 12. Further, as shown in Fig. 2, the propulsion system 10 may comprise an energy source 14 for supplying the electric machines 12 with energy. As a non-limiting example, the energy source 14 may be a battery for supplying electrical energy to the electric machines 12 for propulsion of the electric vehicle 1.

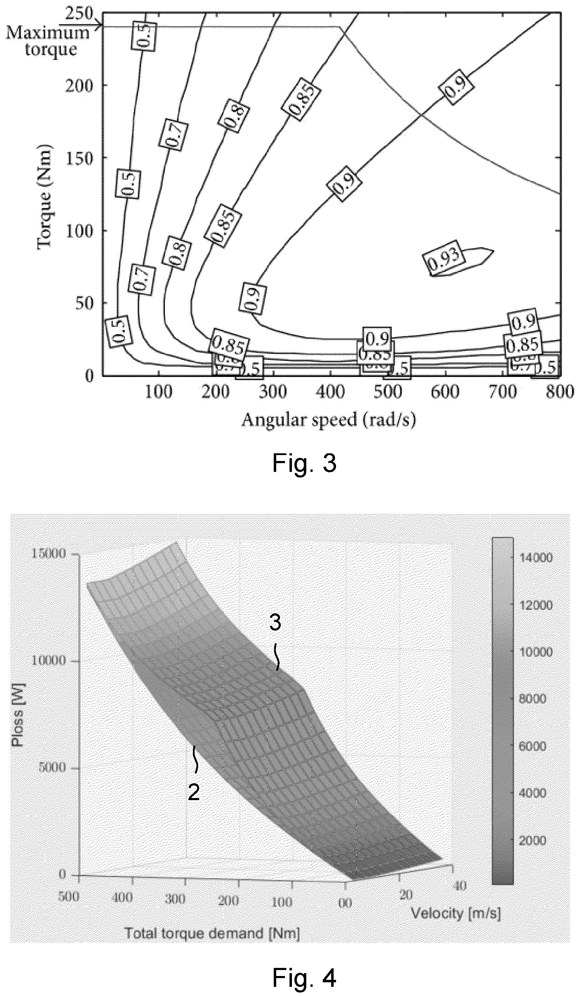

Fig. 3 shows a plot of a power efficiency map for one or more of the electric machines 12 of the electric vehicle 1 of Fig. 2. For example, the power efficiency map may be the same or different for each one of the two or more electric machines 12. For example, the electric machines 12 may be different in terms of their capabilities, e.g., different maximum torque, and hence have different power efficiency maps. Or the electric machines 12 may be different in terms of their design, e.g., different types of electric machines 12 such as permanent magnet and induction motors, thereby having different power efficiency maps.

Fig. 3 illustrates the power losses of the electric machine 12 by showing iso-lines for power efficiency with angular speed and torque on the x- and y- axis respectively. For a particular angular speed, torque can be generated to various efficiencies. However, when using two or more electric machines 12, the torque is typically split in between them, e.g., when each of the electric machines 12 is provided to drive a different axle of the electric vehicle 1.

In case of two or more electric machines 12, the challenge lies in identifying an optimal torque distribution between the electric machines 12 in the driveline or propulsion system 10. Optimal often refers to determining the specific torques for each electrical machine 12 that collectively fulfill the total torque requirement, while minimizing the overall power losses of the electric machines 12 or propulsion system 10.

However, it was found that the optimal distribution in terms of minimizing the overall power losses may cause negative side-effects that will influence other attributes than energy consumption. For example, only torque distribution to the rear wheels of the electric vehicle 1 may lead to excessive oversteering, which is undesired and sometimes hazardous. Another example involves a swift redistribution of wheel torques, potentially causing longitudinal jerk disturbances and altering the vehicle's understeer gradient, thereby causing discomfort to the occupants of the electric vehicle 1.

Fig. 4 shows a plot of power loss regions of the propulsion system 10 of the electric vehicle 1 of Fig. 2 for different total torque demands and different speeds of the electric vehicle 1. This plot may for example by obtained by performing a grid search of speed and torque of the two electric machines 12. Thereby, it is possible for each vehicle speed and torque demand to identify the most (maximum) and least (minimum) power efficient solution of torque distribution between the electric machines 12.

In Fig. 4, first power loss regions 2 and second power loss regions 3 are plotted in a speed or, in other words, velocity - total torque demand space. The first power loss regions 2 are minimum power loss regions in the speed - total torque demand space of the electric vehicle 1, whereas the second power loss regions 3 are maximum power loss regions in the speed - total torque demand space.

For this exemplary electric vehicle 1, from Fig. 4 it becomes clear that there is a significant vertical distance between the minimum and maximum power loss regions 2, 3 in the mid-range of torque (approximately 250 Nm) for the combination of the particular electric machines 12 of the electric vehicle 1, which may be interpreted as there is a large potential of power efficient savings by applying a torque distribution determined to utilize it. On the contrary, for low and high torque demand, there is no or little power loss saving potential. This means that during high acceleration and/or uphill driving when large torque is needed, or situations where low torque is needed such as constant speed on a highway, it may be better to focus on driving comfort and safety when determining the torque distribution between the electric machines 12 rather than to focus on energy efficiency.

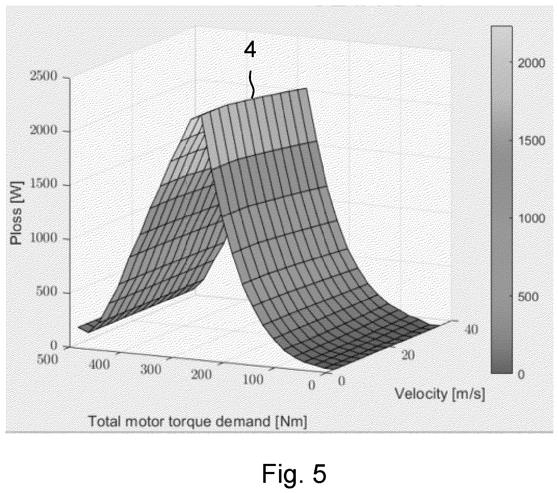

Fig. 5 illustrates a plot of power loss saving potentials 4 for certain torque distributions between the electric machines 12 of the electric vehicle 1. Fig. 5 is based on the same data as Fig. 4 but illustrates the differences or subtractions between the first power loss regions 2 and the second power loss regions 3 as power loss saving potentials 4 thereby illustrating the high power loss saving potentials 4 in the mid-range of torque and the lower power loss saving potentials 4 for low and high torques as discussed above.

The power loss saving potentials 4 may be indicated by power loss data. The power loss data may be obtained in a step 102 of the method 100 executed by the data processing system 20 of the electric vehicle 1. The power loss saving potentials 4 are based on torque distributions between the two or more electric machines 12 for different total torque demands and different speeds of the electric vehicle 1 as shown in Fig. 4. For example, the power loss data may have been previously computed for the particular electric vehicle 1 and its propulsion system 10 and outside of the electric vehicle 1 and then stored on the computer program product 24 or as part thereof. Consequently, the method 100 may obtain the power loss data by reading or executing the computer program product 24.

Before, after or in parallel to step 102, in a step 104 of method 100, torque demand data indicative of a total torque demand of the electric vehicle 1 may be obtained by the data processing system 20. Specifically, the torque demand data may be constantly obtained or updated depending on the current total torque demand of the electric vehicle 1. For example, driving uphill will typically require a larger total torque for propulsion of the electric vehicle 1 than driving downhill or on a level road.

Also, before, after or in parallel to step 102 and/or step 104 of method 100, in a step 106 of method 100, speed data indicative of a current speed of the electric vehicle 1 may be obtained by the data processing system 20. Specifically, the speed of the electric vehicle 1 may be constantly obtained or updated.

Then, in a step 108 of method 100, the torque distribution between the two or more electric machines 12 may be determined, in particular computed, by the data processing system 20 based on the obtained power loss data, the obtained torque demand data, and the obtained speed data. Specifically, a minimum power loss saving potential may be set as a threshold and used to determine the torque distribution such that, when it is consequently applied to the electric machines 12, e.g., in a further step of method 100, it either optimizes the energy efficiency, i.e., reduces the power loss that is possible for that particular total torque demand and speed, or optimizes other characteristics or factors, such as driving comfort and/or driving safety, by determining another torque distribution than would be optimal for reducing the power loss.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

Any reference signs in the claims should not be construed as limiting the scope of the claims.

### LIST OF REFERENCE SIGNS

- 1: electric vehicle
- 2: first power loss region
- 3: second power loss region
- 4: power loss saving potential
- 10: propulsion system
- 12: electric machine
- 14: energy source
- 20: data processing system
- 22: data processing apparatus
- 24: computer program product
- 100: method
- 102-108: steps

## Claims

1. A method (100) for determining a torque distribution between two or more electric machines (12) of an electric vehicle (1) for a total torque demand of the electric vehicle (1), the method (100) comprising:
- obtaining power loss data, the power loss data being indicative of power loss saving potentials (4) based on torque distributions between the two or more electric machines (12) for different total torque demands and different speeds of the electric vehicle (1);
- obtaining torque demand data indicative of a total torque demand of the electric vehicle (1);
- obtaining speed data indicative of a speed of the electric vehicle (1); and
- determining the torque distribution between the two or more electric machines (12) based on the obtained power loss data, the obtained torque demand data, and the obtained speed data.

2. The method (100) of claim 1, wherein the method (100) is executed by a data processing system (20) of the electric vehicle (1).

3. The method (100) of claim 1 or 2, wherein the power loss saving potentials (4) are based on differences between first power loss regions (2) and second power loss regions (3) for the different total torque demands and different speeds of the electric vehicle (1), the second power loss regions (3) having a greater power loss than the first power loss regions (2) for the different total torque demands and different speeds of the electric vehicle (1).

4. The method (100) of claim 3, wherein the first power loss regions (2) are minimum power loss regions and the second power loss regions (3) are maximum power loss regions for the different total torque demands and different speeds of the electric vehicle (1).

5. The method (100) of any one of the previous claims, wherein the method (100) further comprises obtaining threshold data indicative of a minimum power loss saving potential as threshold, and wherein the determining of the torque distribution between the two or more electric machines (12) is further based on the threshold data.

6. The method (100) of claim 5, wherein the determining of the torque distribution comprises determining if the minimum power loss saving potential can be utilized based on the obtained power loss data, the obtained torque demand data, and the obtained speed data, and if it is determined that the minimum power loss saving potential can be utilized, determining the torque distribution such that at least the minimum power loss saving potential is utilized.

7. The method (100) of claim 5 or 6, wherein the determining of the torque distribution comprises determining if the minimum power loss saving potential can be utilized based on the obtained power loss data, the obtained torque demand data, and the obtained speed data, and if it is determined that the minimum power loss saving potential cannot be utilized, determining the torque distribution for optimizing driving comfort and/or safety of the electric vehicle (1).

8. The method (100) of claim 7, wherein the torque distribution is determined such that the traction of the electric vehicle (1) is increased, service life of one or more components of the vehicle (1) is increased, and/or driving comfort is increased.

9. The method (100) of any one of claims 5 to 8, wherein the threshold data is obtained by determining the threshold data based at least on battery data indicative of a state of charge of a battery of the electric vehicle (1).

10. The method (100) of any one of claims 5 to 9, wherein the threshold data is obtained by determining the threshold data based at least on historic data indicative of a previous acceleration behavior of the electric vehicle (1).

11. The method (100) of any one of claims 5 to 10, wherein the threshold data is obtained by determining the threshold data based at least on settings data indicative of one or more user settings.

12. The method (100) of any one of the previous claims, wherein the power loss data is predetermined data obtained from a data storage of the electric vehicle (1).

13. A computer program product (24) comprising instructions which, when executed by a data processing system (20), cause the data processing system (20) to carry out the method (100) of any one of the previous claims.

14. A data processing system (20) comprising means for carrying out the method (100) of any one of claims 1 to 12.

15. An electric vehicle (1) comprising two or more electric machines (12) and the data processing system (14) of claim 14.
